# EUROPEAN PATENT APPLICATION

(11) **EP 4 817 889 A1**
(43) Date of publication of application: **07.10.2026**
(21) Application number: 26161963.9
(22) Date of filing: 03.03.2026
(51) Int. Cl.: B41J 11/00, B41J 2/21, B41M 7/00

(54) **IMAGE FORMING APPARATUS AND IMAGE FORMATION METHOD**

(30) Priority: 25.03.2025 JP 2025049301
(71) Applicant: KYOCERA Document Solutions Inc., Osaka-shi, Osaka 540-8585 (JP)
(72) Inventor: MAEZAWA, Nobuhiro, Osaka-shi, Osaka, 540-8585 (JP)
(74) Representative: Viering, Jentschura & Partner mbB Patent- und Rechtsanwälte

(57) **Abstract**

An image forming apparatus 100 includes a white ink ejecting section 40, a color ink ejecting section 45, a UV irradiation section 30, and a UV control section 80. The white ink ejecting section 40 applies white ink to a printing base material S. The color ink ejecting section 45 applies, to the printing base material S, ink of a different color than the white ink after ejection of the white ink onto the printing base material S. The UV irradiation section 30 irradiates the printing base material S with ultraviolet rays before the application of the white ink to the printing base material S. The UV control section 80 performs control such that a first UV irradiation time for a printing job executed by the image forming apparatus 100 with ejection of the white ink is longer than a second UV irradiation time for a printing job executed by the image forming apparatus 100 without ejection of the white ink.

## Description

### Field

The present disclosure relates to an image forming apparatus and an image formation method that are applicable to, for example, printing on a recording medium.

### Background

In related art, a technology is disclosed that improves adhesion of ink printed on a printing base material to prevent the ink from being removed from the printing base material.

For example, Japanese Patent No. 5808224 discloses performing a corona treatment or a UV treatment, performing treatment using a pretreatment agent such as an amine-based silane coupling agent, and using, as a coloring material, pigment encapsulated with a resin containing an epoxy group, which makes it possible to strongly fix print. However, with respect to the technology disclosed in Japanese Patent No. 5808224, the ink has a poor shelf life, and reduced reactivity and poor ink adhesion are exhibited when the ink is used after being left as it is for a long time. This may result in the ink being removed from a printing base material.

Further, Japanese Patent No. 5728876 discloses maintaining a discharge amount constant by increasing discharge power upon increasing a transportation speed for transporting a printed medium and by gradually reducing the discharge power upon reducing the transportation speed, which makes it possible to maintain wetting tension constant when the transportation speed for transporting a printed medium is increased or reduced. However, with respect to the technology disclosed in Japanese Patent No. 5728876, wetting tension in a printed medium having irregularities is not maintained constant, and poor ink adhesion is exhibited. This may result in ink being removed from a printing base material.

### Summary

An image forming apparatus according to an embodiment of the present disclosure includes a white ink ejecting section, a color ink ejecting section, a UV irradiation section, and a UV control section.

The white ink ejecting section is configured to be capable of applying white ink to a printing base material.

The color ink ejecting section is configured to be capable of applying, to the printing base material, ink of a different color than the white ink after ejection of the white ink onto the printing base material.

The UV irradiation section irradiates the printing base material with ultraviolet rays before the application of the white ink to the printing base material.

The UV control section performs control such that a first UV irradiation time for a printing job executed by the image forming apparatus with ejection of the white ink is longer than a second UV irradiation time for a printing job executed by the image forming apparatus without ejection of the white ink.

An image formation method according to an embodiment of the present disclosure is performed by an image forming apparatus that includes a white ink ejecting section, a color ink ejecting section, and a UV irradiation section. The image formation method includes performing control.

The white ink ejecting section is configured to be capable of applying white ink to a printing base material.

The color ink ejecting section is configured to be capable of applying, to the printing base material, ink of a different color than the white ink after ejection of the white ink onto the printing base material.

The UV irradiation section irradiates the printing base material with ultraviolet rays before the application of the white ink to the printing base material.

The performing control is performing control such that a first UV irradiation time for a printing job executed by the image forming apparatus with ejection of the white ink is longer than a second UV irradiation time for a printing job executed by the image forming apparatus without ejection of the white ink.

According to the present disclosure, adhesion of ink to a printing base material can be improved by performing a UV treatment, even when the printing base material is a smooth plastic film.

### Brief Description of Figures

Fig. 1 schematically illustrates a configuration of an image forming apparatus;
Fig. 2 is a block diagram illustrating the configuration of the image forming apparatus;
Fig. 3 illustrates an image of a printing base material on which cyan ink was printed as color ink;
Fig. 4 illustrates an image of the printing base material on which white ink was printed for a UV treatment time of one minute; and
Fig. 5 illustrates an image of the printing base material on which the white ink was printed for a UV treatment time of two minutes.

### Detailed Description

Hereinafter, embodiments according to the present disclosure will be described with reference to the drawings.

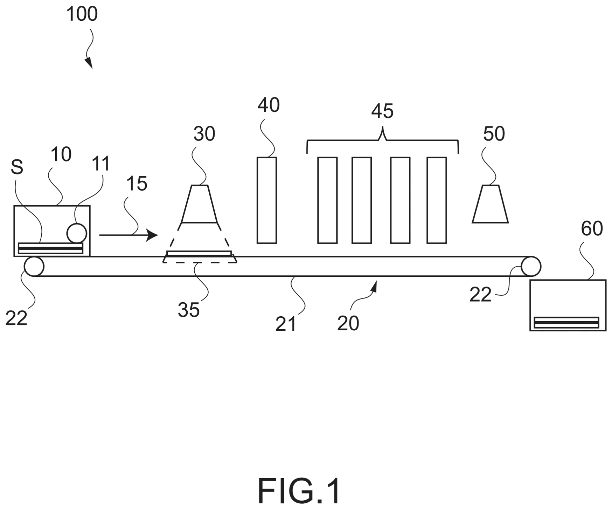

Fig. 1 schematically illustrates a configuration of an image forming apparatus.

As illustrated in Fig. 1, an image forming apparatus 100 includes a printing-base-material feeder 10, a transportation section 20, a UV lamp 30, a white ink ejecting section 40, a color ink ejecting section 45, a drying section 50, and a printing-base-material discharge portion 60.

The printing-base-material feeder 10 stores therein a printing base material S, and includes a roller 11 used to feed the printing base material S. In the present embodiment, the printing-base-material feeder 10 rotates the roller 11 under print instructions from the image forming apparatus 100 to feed the printing base material S in a sheet proceeding direction (refer to an arrow 15).

In the present embodiment, the printing base material S is a plastic film. Note that the printing base material S is not limited to the plastic film, and any printing base material having the property that irregularities are formed on a surface of the printing base material S by the printing base material S being irradiated with UV rays may be used.

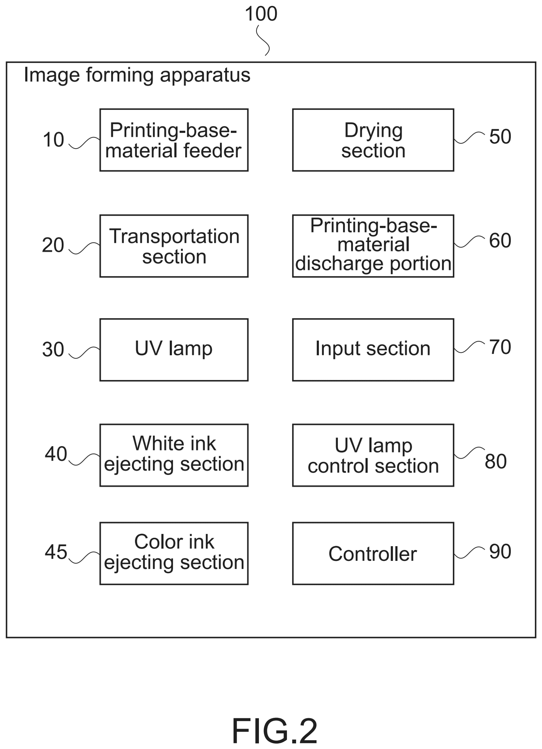

The transportation section 20 includes a transportation belt 21 used to transport the printing base material **S,** and a roller 22 used to drive the transportation belt 21 in order to transport the printing base material S in the sheet proceeding direction. In the present embodiment, the transportation section 20 transports the printing base material S according to a transportation speed for transporting the printing base material S that is input by an input section 70 (refer to Fig. 2). Further, in the present embodiment, the transportation section 20 stops the transportation belt 21 during a UV treatment performed by a UV lamp on the printing base material S. For example, the transportation section 20 stops after transporting the printing base material S such that the printing base material S is within a region 35 in which the printing base material S is irradiated with UV rays.

Further, the transportation section 20 is provided with, for example, an air hole (not illustrated) used to cause the printing base material S to stick to the transportation belt 21. For example, innumerable holes are formed in the transportation belt 21, and air may be sucked in by, for example, a pump (not illustrated) to cause the printing base material S to stick to the transportation belt 21. Moreover, the transportation section 20 may include an inverting mechanism used to invert the printing base material S (for example, from a front-side face to a backside face).

The UV lamp 30 performs a UV treatment to irradiate the printing base material S with ultraviolet rays. In the present embodiment, the UV lamp 30 is arranged upstream of the white ink ejecting section 40 described later in the sheet proceeding direction, and before printing on the printing base material S, the UV lamp 30 performs UV irradiation according to a period of time (hereinafter referred to as a UV treatment time) for which a UV treatment is performed. For example, a low-pressure mercury lamp is used as the UV lamp 30.

The white ink ejecting section 40 is configured to be capable of applying white ink to the printing base material S. For example, the white ink ejecting section 40 includes a head unit that is provided with white ink, a nozzle that is used to eject the white ink, a drive circuit that controls an amount of the white ink to be ejected, and a pressurizing element that applies pressure to the nozzle. The white ink is, for example, an aqueous pigmented ink-jet ink that contains at least pigment, a binder resin, and water. Further, titanium oxide is used as pigment of white ink.

Note that examples of the white ink may include not only pure white but also white-based colors such as ivory, a light yellowish color, a white color of an oyster, snow white, a white color of the moon, and gray-white.

The binder resin is in a state of being dispersed in water (an aqueous medium), and bonds a printing base material and pigment. The binder resin optimizes an ability to fix pigment such as titanium oxide particles to a printing base material. In the present embodiment, the binder resin included in white ink is a polyurethane resin.

The color ink ejecting section 45 is configured to be capable of applying color ink to the printing base material S. For example, the color ink ejecting section 45 includes head units that are respectively provided with inks of cyan, yellow, magenta, and black, a plurality of nozzles respectively used to eject the inks, drive circuits that respectively control amounts of the inks to be ejected, and pressurizing elements that respectively apply pressure to the nozzles. Note that the number of colors for the head units included in the color ink ejecting section 45 is not limited to four, and may be less than or greater than four. Further, the color ink is, for example, an aqueous pigmented ink-jet ink that contains at least pigment, a binder resin, and water.

Note that, with respect to, for example, a binder resin, a solvent, and a surfactant that are included in each of the white ink and the color ink, their types, their amounts contained, and their compositions are not limited. Furthermore, the ratio between pigment and a binder resin, and densities of the pigment and the binder resin, and others are also not limited. Further, the ink does not necessarily have to be a water-based ink. The ink may further include known additives such as a solubility stabilizer, an anti-drying agent, an antioxidant, a viscosity modifier, a pH adjuster, and a fungicide as necessary.

Further, in the present embodiment, the white ink ejecting section 40 is arranged upstream of the color ink ejecting section 45 in the sheet proceeding direction. In other words, the UV lamp 30, the white ink ejecting section 40, and the color ink ejecting section 45 are arranged in this order from the upstream side in the sheet proceeding direction.

Furthermore, in the present embodiment, a viscosity ρw (mPa·S) of white ink at 25°C is favorably lower than a viscosity ρc (mPa·S) of color ink at 25°C. Further, an average particle diameter Dw (nm) of pigment included in white ink is favorably larger than an average particle diameter Dc (nm) of pigment included in color ink.

The drying section 50 dries ink ejected onto the printing base material S. Note that a method for drying ink that is performed by the drying section 50 is not limited. For example, a halogen heater, or a fan that sends heated air may be used, or a mechanism that heats the transportation belt in advance may be used.

The printing-base-material discharge portion 60 stores therein the printing base material S, where ink ejected onto the printing base material S is dried by the drying section 50 to be fixed to the printing base material S.

Fig. 2 is a block diagram illustrating a configuration of the image forming apparatus 100.

As illustrated in Fig. 2, the image forming apparatus 100 includes the printing-base-material feeder 10, the transportation section 20, the UV lamp 30, the white ink ejecting section 40, the color ink ejecting section 45, the drying section 50, the printing-base-material discharge portion 60, the input section 70, a UV lamp control section 80, and a controller 90.

The input section 70 includes, for example, a display and a touchscreen that are provided to the image forming apparatus 100, and receives an operation input by a user. In the present embodiment, raw materials of the printing base material and a transportation speed for transporting the printing base material are input to the input section 70. The transportation speed for transporting the printing base material is output to the transportation section 20.

The UV lamp control section 80 controls a UV treatment time. In the present embodiment, when a first UV treatment time for a printing job executed with ejection of white ink is represented by T1 (sec.) and a second UV treatment time for a printing job executed without ejection of white ink is represented by T2 (sec.), the UV lamp control section 80 performs control such that T1 > T2. Note that the first UV treatment time T1 and the second UV treatment time T2 may have equal values. Further, the second UV treatment time T2 may be zero seconds.

Further, a lower limit (a smallest value) of the first UV treatment time T1 for a printing job executed with ejection of white ink is favorably 30 seconds. Without being limited thereto, any lower limit making it possible to improve adhesion of white ink to a printing base material may be set. Further, an upper limit of the first UV treatment time T1 is also not limited. However, when the UV irradiation time is too long, a failure in the UV lamp 30 may occur due to the UV lamp 30 becoming too hot, or a plastic film may be deformed. Thus, the upper and lower limits of the first UV treatment time T1 are favorably in a range in which adhesion is expected to be improved, and in a range in which a failure in a machine or a deformation of a printing base material does not occur.

Furthermore, in the present embodiment, output of UV rays irradiated by the UV lamp 30 is maintained constant. For example, the UV lamp 30 may be arranged such that a distance between the UV lamp 30 and the transportation section 20 transporting the printing base material S is constant at all times. Further, for example, an ultraviolet illuminance of UV rays irradiated by the UV lamp 30 may be 20 mW/cm². Note that the ultraviolet illuminance is illuminance of ultraviolet rays irradiated onto a region at an irradiation distance of 10 mm with a center position of 50 mm × 50 mm.

The controller 90 controls the image forming apparatus 100. For example, the controller 90 includes a computation section and a storage (not illustrated). The computation section is, for example, a central processing unit (CPU). The storage includes a storage medium such as a read only memory (ROM), a random access memory (RAM), or an electrically erasable programmable read only memory (EEPROM). The computation section performs various processes by reading a control program stored in the storage and executing the control program.

Further, for example, the controller 90 may form an image by performing control such that an ejection signal depending on a pixel is supplied to the white ink ejecting section 40 or the color ink ejecting section 45 on the basis of input image data to apply ink to the printing base material S and such that a drying process is performed by the drying section 50 at an appropriate timing. Furthermore, the controller 90 may determine, from the input image data, whether the printing job is a printing job executed with ejection of white ink or a printing job executed without ejection of white ink. Moreover, the controller 90 may control a temperature of the drying section 50, a degree of supply of heated air by the drying section 50, a transportation speed at which the transportation section 20 transports a printing base material, and stop of the transportation performed by the transportation section 20.

Note that the configuration of the image forming apparatus 100 is not limited. For example, the input section 70 may be configured to be capable of not only inputting glossiness but also selecting data of an image printed on a printing base material and selecting various functions regarding printing functions for, for example, the number of sheets of paper printed and double-sided printing.

### Examples

Examples of the present disclosure are described below. Note that Examples described below are merely examples of the present disclosure, and the present disclosure is not limited to configurations of Examples described below.

### Tape Stripping Test

In the present disclosure, the approach provided by JIS K5600 was adopted, where there was no crosscut. A tape was applied to a printing base material on which printing was performed, the tape was firmly rubbed with fingertips, and the tape was stripped within five minutes after the application of the tape. Here, an end of the tape was held at an angle as close to 60 degrees as possible to strip the tape from the printing base material with certainty in 0.5 seconds to 1.0 second.

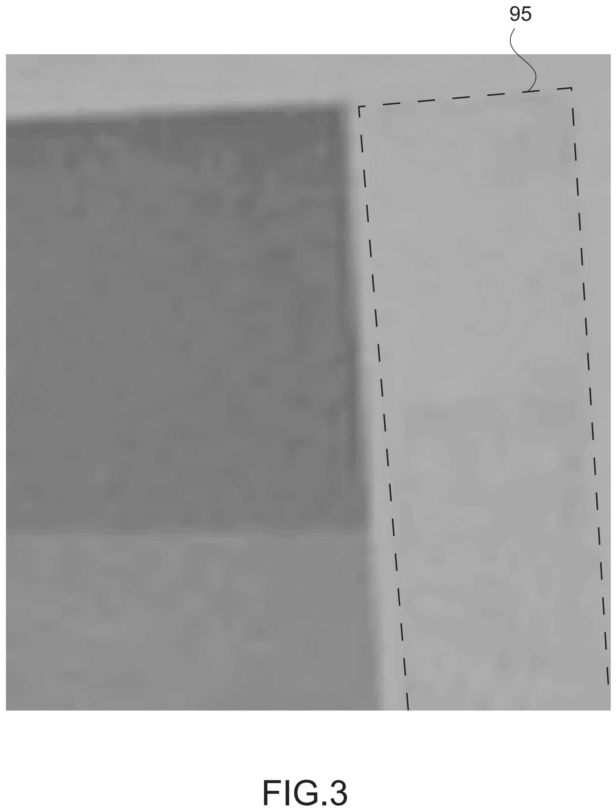

Fig. 3 illustrates an image of the printing base material on which cyan ink was printed as color ink. In Fig. 3, a UV treatment was performed on an OPP film for a UV treatment time of one minute, and solid cyan on the OPP film was obtained by printing the cyan ink on the OPP film at 600 dpi. After the ink was dried, the tape stripping test described above was performed. As illustrated in Fig. 3, the ink did not stick to the tape (refer to a dotted line 95).

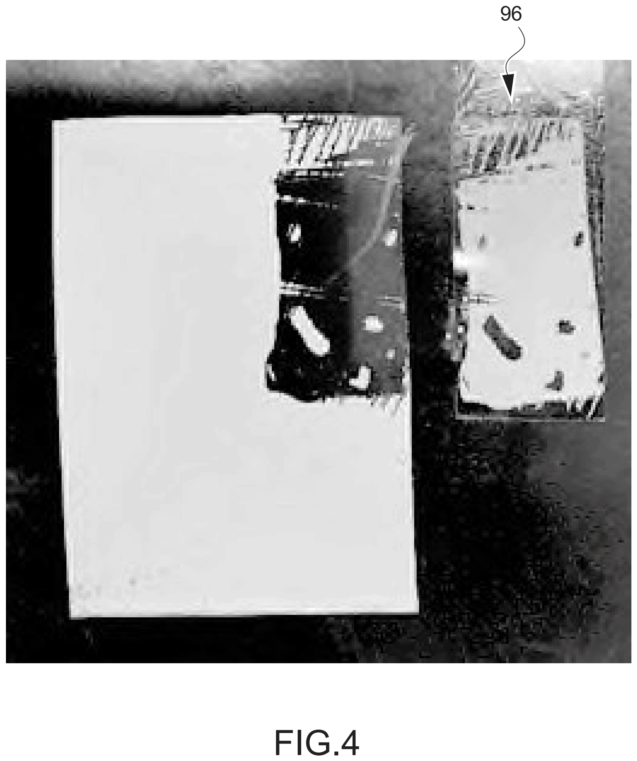

Fig. 4 illustrates an image of the printing base material on which white ink was printed for a UV treatment time of one minute. In Fig. 4, the UV treatment was performed on an OPP film for a UV treatment time of one minute, and solid white on the OPP film was obtained by printing the white ink on the OPP film at 600 dpi. After the ink was dried, the tape stripping test described above was performed. As illustrated in Fig. 4, the ink stuck to a tape 96.

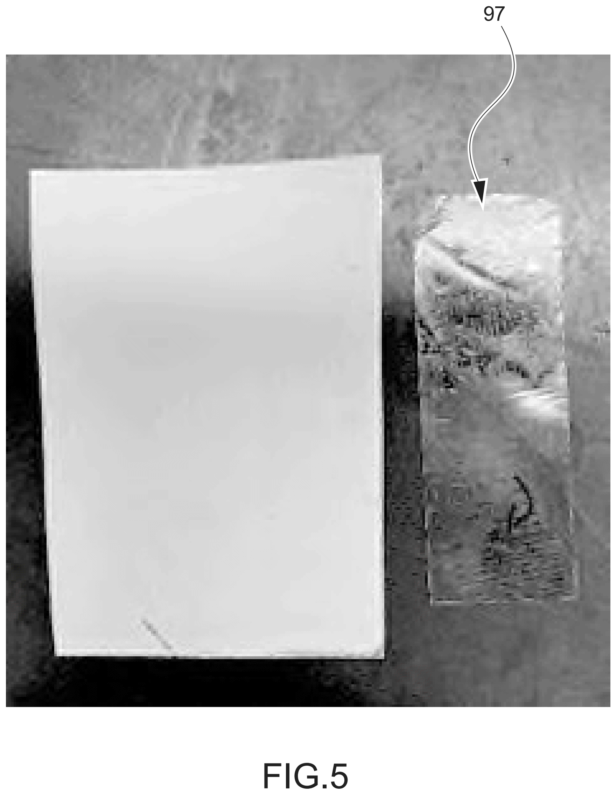

Fig. 5 illustrates an image of the printing base material on which white ink was printed for a UV treatment time of two minutes. In Fig. 5, the UV treatment was performed on an OPP film for a UV treatment time of two minutes, and solid white on the OPP film was obtained by printing the white ink on the OPP film at 600 dpi. After the ink was dried, the tape stripping test described above was performed. As illustrated in Fig. 5, the ink did not stick to a tape 97.

The results described above show that adhesion of ink to a printing base material (a plastic film) is improved when a UV treatment time for the printing base material is sufficient. These phenomena can be explained using an anchor effect. A surface of a printing base material has microscopic irregularities, and ink enters spaces formed by the irregularities. This results in increasing the degree of adhesion. However, when a printing base material has a smooth surface, a degree of adhesion of ink to the printing base material is low.

Further, the following two effects provide a mechanism for improving adhesion of ink to a printing base material by performing a UV treatment. The first effect is a physical effect provided by forming microscopic irregularities on a surface of the printing base material, and the second effect is a scientific effect provided by forming, for example, a carbonyl group and a carboxyl group that are polar groups as well as nitride. The physical effect enables ink to easily enter a surface of a printing base material (a plastic film) due to irregularities on the surface. This results in improving adhesion. Further, the scientific effect improves wettability since the polar groups are hydrophilic. This results in improving adhesion.

### Examples 1 to 6 and Comparative Example 1

The following are conditions for Examples 1 to 6 and Comparative Example 1.

### Printing Base Material and Ink

In the present disclosure, OPP was used as the printing base material. Further, in addition to white ink, cyan ink was used as color ink, and printing was performed at 600dpi.

### Adhesion

An unused tape and a tape on which the tape stripping test described above was performed were applied to copy sheets of paper (C2, FUJIFILM Business Innovation Corp.), and an image density of cyan was measured using an image densitometer (FD-5, Konica Minolta, Inc.). A (particularly good) was given when a difference between an image density of the tape on which the stripping test was performed, and an image density of the unused tape was less than 0.05, B (good) was given when the difference was less than 0.15, and C (poor) was given when the difference was greater than or equal to 0.15.

### Opacity

In the present disclosure, measurement was performed using a spectrophotometer CM-25cG (Konica Minolta, Inc.), where the printing base material was placed on a black portion of a contrast ratio testing strip (produced by TP Giken). A (particularly good) was given when an image density of black was less than 0.2, B (good) was given when the image density was less than 0.3, and C (poor) was given when the image density was greater than or equal to 0.3.

| | UV treatment time (min) | | Viscosity (mPa·S) | | Average particle diameter (nm) | | Evaluation results | |
|---|---|---|---|---|---|---|---|---|
| | T1 | T2 | ρw | ρc | Dw | Dc | Adhesion | Opacity |
| Example 1 | 2 | 1 | 5.5 | 6.0 | 300 | 100 | A | A |
| Example 2 | 1.5 | 1 | 5.5 | 6.0 | 300 | 100 | A | A |
| Example 3 | 1 | 1 | 5.5 | 6.0 | 300 | 100 | B | A |
| Example 4 | 2 | 1 | 5.9 | 6.0 | 300 | 100 | A | A |
| Example 5 | 2 | 1 | 5.5 | 6.0 | 200 | 150 | A | A |
| Example 6 | 2 | 1 | 6.0 | 6.0 | 300 | 100 | B | A |
| Example 7 | 2 | 1 | 5.5 | 6.0 | 150 | 150 | A | C |
| Comparative Example 1 | 1 | 1.5 | 5.5 | 6.0 | 300 | 100 | C | A |

In Examples 1, 2, 4, and 5, particularly good adhesion and opacity were exhibited. The following are reasons for this. The UV irradiation time T1 for a printing job executed with ejection of white ink was longer than the UV irradiation time T2 for a printing job executed without ejection of white ink. Further, the viscosity ρw of white ink at 25°C was lower than the viscosity ρc of cyan ink at 25°C. Furthermore, the average particle diameter Dw of pigment included in white ink was larger than the average particle diameter Dc of pigment included in cyan ink.

In Example 3, good adhesion and particularly good opacity were exhibited. The following is a reason for this. The UV irradiation time T1 for a printing job executed with ejection of white ink was the same as the UV irradiation time T2 for a printing job executed without ejection of white ink.

In Example 6, good adhesion and particularly good opacity were exhibited. The following is a reason for this. The viscosity ρw of white ink at 25°C was the same as the viscosity ρc of cyan ink at 25°C.

In Example 7, particularly good adhesion and poor opacity were exhibited. The following is a reason for this. The average particle diameter Dw of pigment included in white ink was the same as the average particle diameter Dc of pigment included in cyan ink.

In Comparative Example 1, poor adhesion and particularly good opacity were exhibited. The following is a reason for this. The UV irradiation time T1 for a printing job executed with ejection of white ink is shorter than the UV irradiation time T2 for a printing job executed without ejection of white ink.

As described above, the image forming apparatus 100 according to the present embodiment includes the white ink ejecting section 40 configured to be capable of applying white ink to the printing base material S, the color ink ejecting section 45 configured to be capable of applying, to the printing base material S, color ink different from the white ink after ejection of the white ink onto the printing base material S, the UV lamp 30 irradiating the printing base material S with ultraviolet rays before the application of the white ink to the printing base material S, and the UV lamp control section 80 performing control such that the first UV irradiation time T1 for a printing job executed by the image forming apparatus 100 with ejection of white ink is longer than the second UV irradiation time T2 for a printing job executed by the image forming apparatus 100 without ejection of white ink. As a result, adhesion of ink to a printing base material can be improved by performing a UV treatment, even when the printing base material is a smooth plastic film.

In related art, poor adhesion of ink to a printing base material may result in the ink being removed from the printing base material. On the other hand, there is a method that includes, for example, performing corona discharge on a printing base material in order to improve wettability of the printing base material for ink. However, sufficient adhesion is not secured for the printing base material having irregularities. This results in ink being removed from the printing base material.

Further, compared with inks of colors such as cyan, yellow, magenta, and black, the average particle diameter of pigment included in white ink in which titanium oxide is used as the pigment is large. This results in a reduction in adhesion of white ink to a binder resin (a printing base material). Furthermore, a large average particle diameter of pigment included in white ink results in increasing opacity and a color development ability. Thus, the average particle diameter of pigment included in white ink is favorably large when the white ink is applied to a transparent printing base material such as a plastic film. Thus, there is a trade-off relationship between adhesion and each of the opacity and the color development ability. Further, for example, white ink has a lower degree of viscosity at 25°C than color ink. This results in a reduction in adhesion of the white ink to a printing base material.

In other words, when white ink requiring a large particle size of pigment in order to obtain opacity for white is ejected onto a smooth printing base material such as a plastic film, the white ink exhibits a lower degree of adhesion, compared to inks of other colors, and it is difficult to perform coating with a binder resin. This results in white ink being easily removed from a surface of a printing base material.

In the present technology, control is performed such that the UV treatment time for which ultraviolet rays are irradiated is changed between two printing jobs that include a printing job executed with ejection of white ink onto a printing base material and a printing job executed without ejection of the white ink onto the printing base material. Accordingly, the UV treatment time when white ink is ejected is set to be longer than the UV treatment time when the white ink is not ejected. This makes it possible to improve adhesion of ink to a printing base material, and thus to prevent the dried ink from being removed from the printing base material.

### Other Embodiments

The present technology is not limited to the embodiments described above, and can achieve various other embodiments.

In the embodiments described above, transportation of the printing base material S by the transportation section 20 is stopped during execution of a UV treatment. Without being limited thereto, the printing base material S may also be transported during execution of the UV treatment. When, for example, the UV treatment time is two minutes, a transportation speed at which the transportation section 20 performs transportation may be controlled such that the time necessary for the printing base material to pass through the region 35 in which ultraviolet rays are irradiated by the UV lamp 30, is two minutes.

In the embodiments described above, output of UV rays irradiated by the UV lamp 30 is maintained constant. Without being limited thereto, the output of UV rays may be controllable. For example, a distance between the UV lamp 30 and the transportation section 20 (the printing base material S) may be controllable, or illuminance of ultraviolet rays output by the UV lamp 30 may be controllable.

In the embodiments described above, the drying section 50 is arranged downstream of the white ink ejecting section 40 and the color ink ejecting section 45. Without being limited thereto, a second drying section may be arranged between the white ink ejecting section 40 and the color ink ejecting section 45. In other words, the UV lamp 30, the white ink ejecting section 40, the second drying section, the color ink ejecting section 45, and the drying section 50 may be arranged in this order in a proceeding direction of the printing base material **S.** Further, the second drying section may have the same configuration as the drying section 50 or may have a different configuration than the drying section 50, and the second drying section does not necessarily have to sufficiently dry white ink applied to the printing base material S. For example, the second drying section may dry white ink to such an extent that liquid drops of the white ink do not spread.

In the embodiments described above, the UV lamp control section 80 performs control such that the first UV treatment time T1 for a printing job executed with ejection of white ink is longer than the second UV treatment time T2 for a printing job executed without ejection of white ink. Without being limited thereto, the UV lamp control section 80 may control the UV treatment time on the basis of an arithmetic average roughness or glossiness of a printing base material.

For example, a degree of adhesion of ink to a printing base material is lower if a degree of arithmetic average roughness of a plastic film is lower, but the adhesion is improved by performing a UV treatment. Further, a degree of adhesion of ink to a printing base material is lower if a degree of glossiness of a plastic film is higher, but the adhesion is improved by performing a UV treatment. These phenomena can be explained using an anchor effect, as in the case described above. Note that the UV lamp control section 80 may control the UV treatment time by the arithmetic average roughness or glossiness of a printing base material being input to the UV lamp control section 80 through the input section 70.

It should be understood by those skilled in the art that various modifications, combinations, subcombinations and alterations may occur depending on design requirements and other factors insofar as they are within the scope of the appended claims or the equivalents thereof.

## Claims

1. An image forming apparatus (100) that forms an image on a printing base material (S), the image forming apparatus (100) comprising:
a white ink ejecting section (40) configured to be capable of applying white ink to the printing base material (S);
a color ink ejecting section (45) configured to be capable of applying, to the printing base material (S), ink of a different color than the white ink after ejection of the white ink onto the printing base material (S) ;
a UV irradiation section (30) that irradiates the printing base material (S) with ultraviolet rays before the application of the white ink to the printing base material (S); and
a UV control section (80) that performs control such that a first UV irradiation time for a printing job executed by the image forming apparatus (100) with ejection of the white ink is longer than a second UV irradiation time for a printing job executed by the image forming apparatus (100) without ejection of the white ink.

2. The image forming apparatus (100) according to claim 1, wherein
the white ink contains at least pigment, a binder resin, and water.

3. The image forming apparatus (100) according to claim 2, wherein
the pigment includes titanium oxide.

4. The image forming apparatus (100) according to claim 2 or 3, wherein
the binder resin includes a polyurethane resin.

5. The image forming apparatus (100) according to claim 1 or 2, wherein
the printing base material (S) includes a plastic film.

6. An image formation method that is performed by an image forming apparatus (100) that includes a white ink ejecting section (40) configured to be capable of applying white ink to a printing base material (S), a color ink ejecting section (45) configured to be capable of applying, to the printing base material (S), ink of a different color than the white ink after ejection of the white ink onto the printing base material (S), and a UV irradiation section (30) that irradiates the printing base material (S) with ultraviolet rays before the application of the white ink to the printing base material (S), the image formation method comprising
performing control such that a first UV irradiation time for a printing job executed by the image forming apparatus (100) with ejection of the white ink is longer than a second UV irradiation time for a printing job executed by the image forming apparatus (100) without ejection of the white ink.
